# EUROPEAN PATENT APPLICATION

(11) **EP 1 406 420 A2**
(43) Date of publication of application: **07.04.2004**
(21) Application number: 03103600.7
(22) Date of filing: 29.09.2003
(51) Int. Cl.: H04L 12/56, G06F 9/46

(54) **Method and Implementation for Context Switchover**

(30) Priority: 04.10.2002 US 264831
(71) Applicant: Zarlink Semiconductor V.N. Inc., Irvine, CA 92612 (US)
(72) Inventor: BARRACK, Craig, Irvine, 92612 California (US); CHANG, Rong-Feng, Irvine, 92620 California (US); WALKER, Anthony, Newport Beach, 92660 California (US)
(74) Representative: Harding, Richard Patrick

(57) **Abstract**

A method of context switchover continuity is disclosed in which a context is sent from a transmitting entity to a receiving entity. Initial first and second context state entries are maintained in respective tables at the transmitting entity and at the receiving entity. The initial first and second context state entries include context state information about the context. New reconfigured first and second context state entries are created at the transmitting entity and the receiving entity having reconfigured context state information. The new reconfigured first and second context state entries are activated so as to enable the sending of a reconfigured context from a transmitting entity to a receiving entity. A plurality of contexts are included, and each of the plurality of contexts has respective initial first and second context entries in the respective tables. The respective initial first and second context entries are active entries and the new reconfigured first and second context state entries are latent entries until the step of activating.

## Description

The present invention is directed to the field of data flow management, particularly with respect to the management of communication medium (i.e. physical channel such as a wire or radio channel) over which a plurality of "contexts" are carried. A "context," also known as a "flow" or a "logical channel," is a throughput of data that is carried along a physical communication medium. As many as one or two thousand contexts can be carried at one time along a physical channel in a network. These contexts can be multiplexed in any useful scheme, preferably through Time -Division Multiplexing (TDM). These various contexts can be used for simultaneously transporting data, voice, and multimedia throughput.

The simultaneous handling of many contexts of various media is a cornerstone of the "convergence revolution." Convergent hardware devices are designed for simultaneously transporting various media, such as data, voice, and multimedia. Such convergent devices work by maintaining an appropriate amount of "state information" for each context. This state information is usually maintained in a table stored in random access memory (RAM) internal to the device or accessible externally, e.g. on a remote device over a network. State information for each context may include: packet header fields to be affixed; payload lengths or partial checksum values; the sequence number or timestamp of the last packet seen; average decibel energy of voice samples; instructions as to whether silent payloads should be suppressed; byte count or interarrival jitter statistics, etc.

In a network environment, there may often be a need to reconfigure the state of a context state without disturbing the connection in progress. In such ca ses, the switchover from the old configuration to the new one must occur seamlessly and transparently. Three practical examples of context switchover are illustrated hereinbelow.

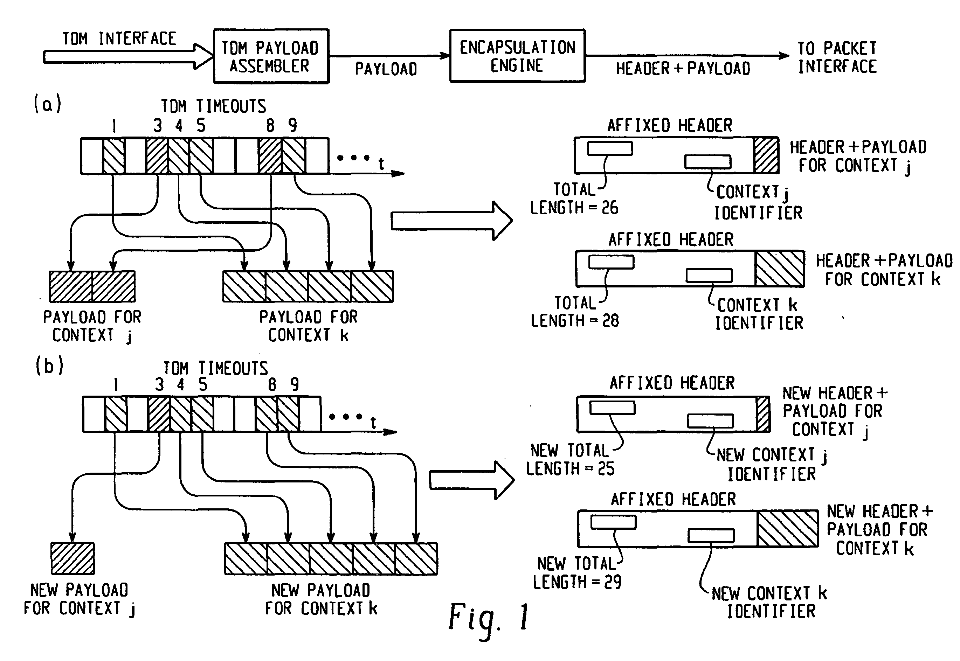

Example 1: In a pure transport from TDM to packet, modification of channel mapping is desired. Fig. 1 illustrates packet encapsulation before and after a change in the TDM channel mapping. In this scenario, the number of TDM channels encapsulated in a single payload changes, which in turn, affects the content of the header to b e affixed, and therefore, the state of each context. As shown in (a) in Fig. 1, physical channels 3 and 8 map to context j, and physical channels 1, 4, 5, and 9 map to context k. A payload unit is formed by taking one byte of TDM data from each of the channels associated with a given context, and packing those bytes together. The encapsulation engine is responsible for prefixing a context -appropriate header to the payload. As illustrated partly by the figure, the header may include information that indi cates the packet's context, length, sequence number, payload type, and so on.

As shown in (b) in Fig. 1, a channel re -mapping has occurred. Physical channel 3 now maps to context j, and physical channels 1, 4, 5, 8, and 9 map to context k. As a result, the header affixed to the payload must change as well. For example, the context identifiers for j and k must at least superficially change, so as to alert the receiving end that the channelized data has been packed differently. For example, the context identifier field may store a completely different number, or may simply toggle one bit to flag the context modification. In addition, the length field in the packet header will hold a value one less than before for context j, and one greater than before for context k.

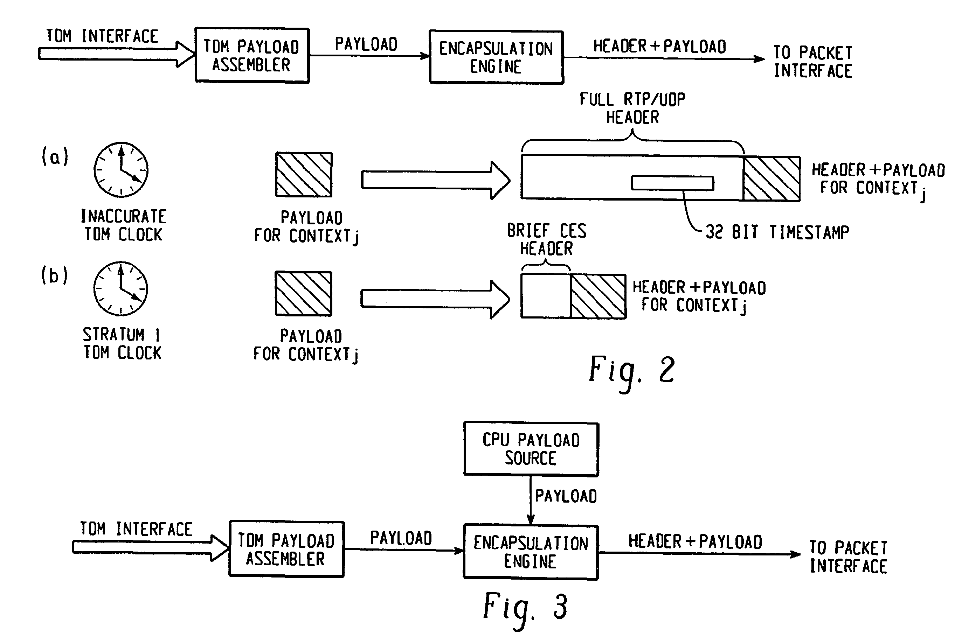

Example 2: In a circuit emulation over packet, a clock change on the fly is desired. Fig. 2 illustrates packet encapsulation before and after the inaccurate TDM clock has been replaced by an accurate clock. In this scenario, a packet netw ork is used to emulate a leased line service. Therefore, accurate timing information needs to be transported from end to end. As shown in (a) of Fig. 2, the TDM clock does not have sufficient accuracy to guarantee that the receiver will experience neither a glut nor a scarcity of data for context j over time. Because of the slight clock differential between devices, the receiver will have to adapt its local clock to the incoming stream. At the transmitter, each packet is stamped with a time from the ina ccurate clock. Periodically, the transmitter sends a "clock equivalency" message, which provides a mapping between the current time read from the inaccurate clock, and the actual wallclock time. The actual wallclock time may be obtained from Global Positioning System (GPS) satellite, for example. Even if an accurate clock source such as GPS is available, it may not be used for TDM timing, because TDM equipment is often located in a building's basement, inaccessible by the GPS on the roof. In such cases, clock equivalency messages become useful. The receiver uses its own wallclock and the mapping provided by the clock equivalency messages to deduce the "meaning" of the timestamps from the incoming stream. The receiver can then adapt its own local clock to the incoming stream, play out the packets at exactly the right times, and thereby emulate a permanent telephone connection, such as a T-1 channel.

The IETF standard for Pseudowire Emulation Edge -to-Edge (PWE3) requires that a RTP header (with 32-bit timestamp field) be used to transmit any timing information, as in Figure 2(a). One advantage of this encapsulation for circuit emulation is that it makes use of a preexisting protocol, already known to work well in real -time applications such as video conferencing. One disadvantage is that the RTP/UDP header requires a lot of bandwidth. In circuit emulation, the payload size is frequently only a few bytes, and the addition of 20 bytes of header just to transmit a timestamp is uneconomical.

The section indicated as (b) in Fig. 2 illustrates what happens when an accurate Stratum 1 clock replaces the inaccurate TDM clock. Because both transmitter and receiver are guaranteed to use TDM clocks that are highly accurate, no timing information needs to be transmitted across the network. Therefore, the IETF requirement about timing does not apply, and a bandwidth - conserving Circuit Emulation Services (CES) header can be used to replace the RTP/UDP header of Figure 2(a). The CES header will be short, perhaps conta ining only a sequence number and a few connection status bits (while such particulars will become clear when a consensus emerges on the format of the pseudowire header, as these standards are still evolving at the present time.)

Example 3: In a "Voice-over-IP" application, it is desired to insertion a prerecorded message. Figure 3 illustrates a scenario where a recorded message and a human speaker share the same outgoing voice stream. In a Voice -over-IP (VoIP) application, two sources feed the same outgoing stream: the first, the voice of a human speaker, and the second, a prerecorded message. The situation illustrated by Figure 3 could occur during a telephone call paid by calling card, when the number of prepaid minutes is about to expire. A short recorded message saying "you have 2 minutes left" (or something to that effect) will be injected into the outgoing stream in lieu of the voice of the human speaker. This stream multiplexing operation is performed by temporarily switching contexts from the hu man speaker to the recorded message, then switch back again at the end of the recorded message. During the short interval when packets for the recorded message are being transmitted, voice packets from the human speaker will be identified with an invalid context and discarded.

Solutions to the problem of context switchover have been proposed previously, as depicted in the high-level control plane concept of Table 1, which shows generic control plane behavior preceding a context switchover..

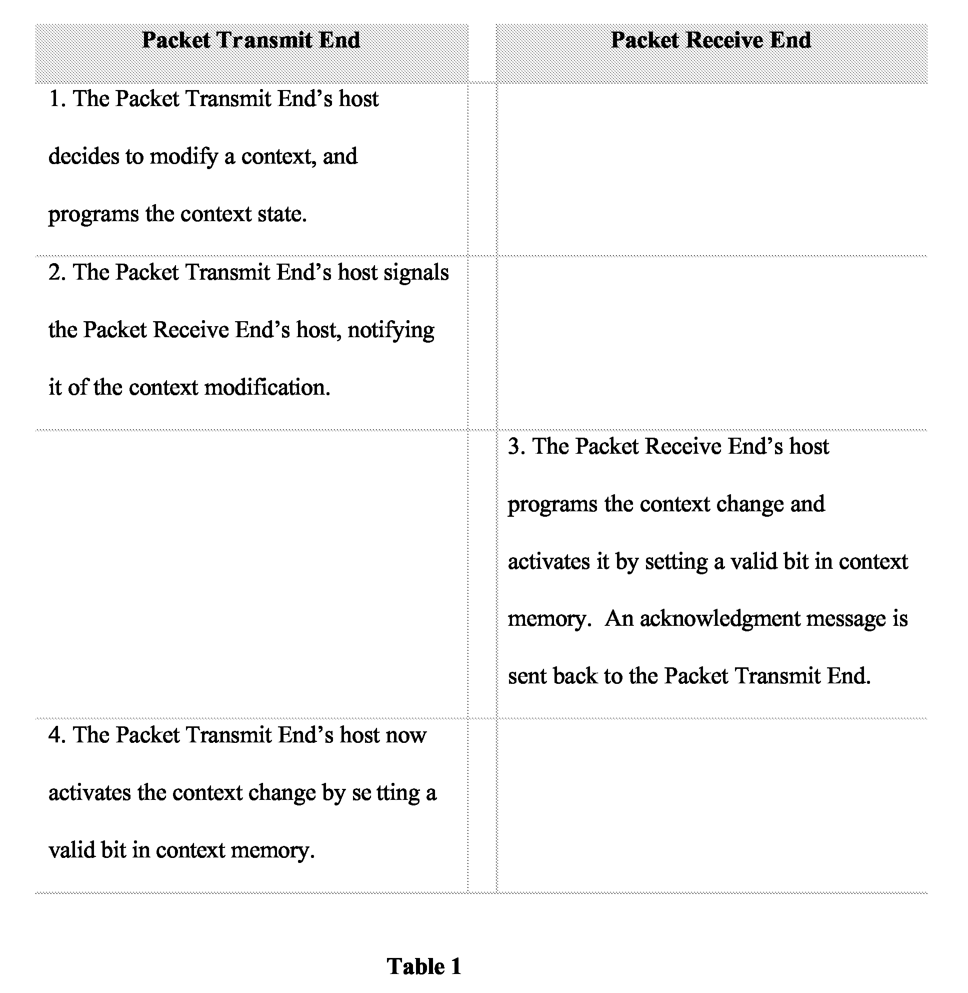

In this approach, the context memory table is divided into two parts: an active state (in use currently) and a latent state (programmable by the host for future use). When the local host requires a context switchover, the transmitter and the receiver signal each other as indicated in Table 1, and on both ends, the new context information is programmed into the latent portion of context memory. The latent and the active context states swap once the entire h andshaking protocol has been consummated. The next data arriving for that context will apply the new information.

While enabling context switchover, this previous -type solution has certain drawbacks, such as poor "space efficiency." The earlier architecture for context switchover is based upon swapping between an active and a latent context state. If the amount of memory allocated for each context is given as σ, and a device supports n contexts, then the total space required for this algorithm is 2nσ. This solution effectively doubles the size of the context state table. Since available space is limited in hardware, the factor of 2 may be unacceptable if n is large, e.g. between 1000 and 2000 in typical throughput situations.

The previous-type solution also suffers from a lack of "sequencing/timing continuity." In the earlier architecture, in the period prior to a context switchover, the latent portion of the context memory table is programmed by the host. When the context switchover occurs, this n ew information is swapped into the active state, and the old information is invalidated. In many cases, however, dynamic variables stored in the old context state cannot simply be reprogrammed by the host into the new context state. The most common examples of such dynamic variables are sequence number and timestamp. In many protocols, the encapsulation engine must insert either a sequence number, a timestamp, or both, into the packet header. To properly perform these insertions over time, the active po rtion of the context memory table must always store the sequence number and/or timestamp of the preceding packet. When a packet arrives, the encapsulation engine retrieves the sequence number or timestamp of the preceding packet, adds a constant to generate the next sequence number or timestamp, inserts this new value into the incoming packet's header, and records this value in the active context state.

To be transparent to the application layer, a context switchover cannot affect the pattern of sequence numbers and/or timestamps observed at the receiver. For example, if the sequence number is numbered "17" on the last packet before the context switchover, then the first packet after the switchover it must be numbered "18." Unfortunately, software cannot simply program the number "18" into the latent context state, because there is no way for software to predict at the time of configuration what the exact moment of the switchover would be.

The difficulties and drawbacks of previous solutions a re addressed in the method of context switchover continuity according to the present invention in which a context is sent from a transmitting entity to a receiving entity. Initial first and second context state entries are maintained in respective tables at the transmitting entity and at the receiving entity. The initial first and second context state entries include context state information about the context. New reconfigured first and second context state entries are created at the transmitting entity and the receiving entity having reconfigured context state information. The new reconfigured first and second context state entries are activated so as to enable the sending of a reconfigured context from a transmitting entity to a receiving entity. A plurality of contexts are included, and each of the plurality of contexts has respective initial first and second context entries in the respective tables. The respective initial first and second context entries are active entries and the new reconfigured first and second context state entries are latent entries until the step of activating.

As will be realized, the invention is capable of other and different embodiments and its several details are capable of modifications in various respects, all without departing from the invention. Accordingly, the drawing and description are to be regarded as illustrative and not restrictive.

### Brief Description of the Drawings

Fig. 1 is a depiction of a typical packet encapsulation before and after a change in the TDM channel mapping.
Fig. 2 is a depiction of a typical packet encapsulation before and after replacement of an inaccurate TDM clock with an accurate clock.
Fig. 3 is a depiction of a scenario where a recorded message and a human speaker share the same outgoing voice stream.
Fig. 4 illustrates a space -efficient solution to the problem of space efficiency in the context switchover mechanism in accordance with one aspect of the present invention.
Fig. 5 illustrates a solution to the problem of maintaining se quencing and/or timing continuity following a context switchover, in accordance with one aspect of the present invention.
Fig. 6 shows an alternative, space -efficient data structure for context memory, with a mechanism for maintaining sequencing and/or timing continuity, in accordance with the present invention.

### Detailed Description of the Invention

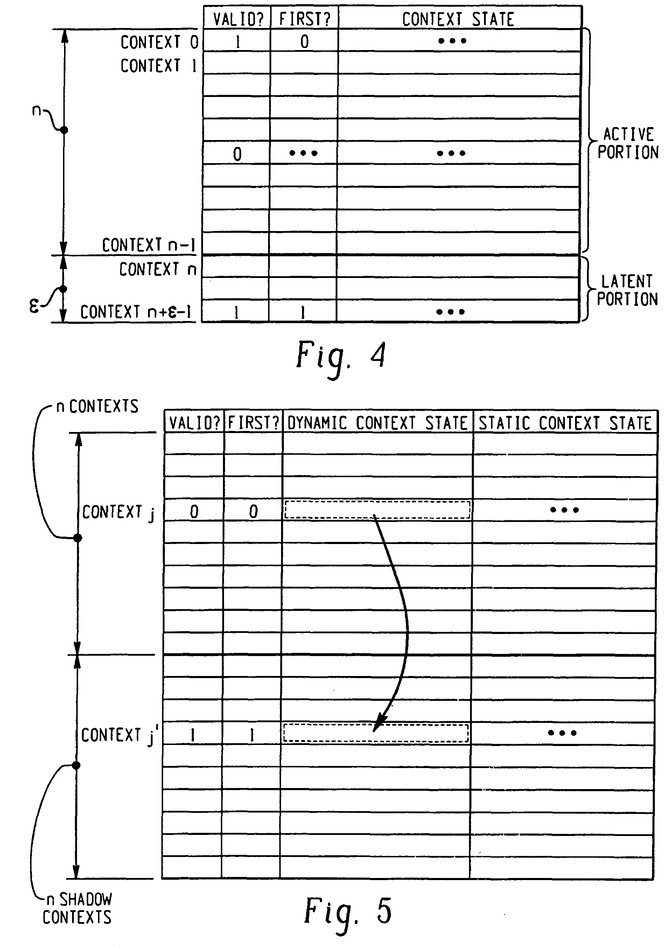

Fig. 4 illustrates one aspect of the invention in which a space -efficient solution is proposed to the problem of space efficiency in the context switchover mechanism. With the solution of the present invention, one assumes that the number of contexts are given as "n." Rather than having "2n" rows in a table, only a small number ε of rows are allocated for latent context states, to be used for context switchovers, resulting in n+ ε rows. As shown in Fig. 4, ε « n, and the total context memory required is σ(n+ε). For example, "n" may be 1000 -2000 contexts, as given above, but "ε" is a significantly smaller number, e.g. eight. In this way, the length of tab le is substantially unchanged, since the number of latent rows are negligible compared to the number of active rows in the table. This results in a substantial savings in system overhead from the earlier architecture.

As shown in Fig. 4, the context state table of the present invention includes three fields. A "Context State" field is provided for storing information about the state of each context. Also, two new one-bit fields are provided for each row, a "Valid?" field and a "First?" field. In routi ne operation, in the tables of a host and a client, the "Valid?" bit of an active context state entry is set to "1" to indicate that the state of the context is valid for sending and receiving data throughput. The "First?" bit is used to indicate whether the first packet of a new context state has been received by the client. In routine operation, the "First?" bit of an active context state entry is set to "0." As shown in Fig. 4, for routine operation of an active context state, the "Valid?" and "First?" bits can therefore be indicated by an "activation state" of "1/0."

When the host initiates a context switchover, the existing context state is temporarily maintained on the active portion of the table as an "old" context state entry. A "new" context state entry is created on the latent portion of the table using one of the ε latent context state rows, and is used to store the new configuration information. The latent context rows have default "Valid?" and "First?" values of "0" respectively (an activati on state of "0/0"). The new configuration data is stored in a ε latent context state entry in the transmitting host device.

After storing the new configuration data, the host sends instructions to the receiving client device to make corresponding changes in a respective new context state entry, in an ε latent context state row in that device's respective context state table. After entering the new configuration data in the new context state entry, the values of the "Valid?" and "First?" bits are each changed to "1" respectively (an activation state of "1/1"), to indicate that the new entry is valid, but that the first packet has not yet been received by the client. A new context state entry with an activation state of "1/1" is considered activated and thereby in the active portion of the table rather than the latent portion. After these steps are completed, the receiving client device sends an acknowledgment back to the host device confirming that the configuration changes were received and that the new context state entry has been revised accordingly.

When the acknowledgment has been received by the host that configuration updates are complete, the "Valid?" bit in the new ε latent context state row is set to "1." This activates the new context, and the entry including the incorporated configuration changes is moved from the latent portion of the table to the active portion. The "First?" bit in the host table's new context entry is also set to "1," so that this entry also has an activation state of "1/1 ." The host will now commence sending packets to the client associated with the new context.

When the first packet identified with the new context is received by the client, the "First?" bit of the new context entry is reset to "0." The activation state of the new context entry is now "1/0," indicating a fully active context entry row in the client's context table. The client notifies the host of this change. The host responds by changing the "Valid?" bit of the old context state to "0," thereby invalidating the old context state. As the activation state of the old context state is now "0/0," the old context state row is converted to a latent context state row, and thereby "recycled" for use in a future context switchover. The host instructs the client to also change the "Valid?" bit of the old context state to "0," thereby invalidating the old context state on the client table. With an activation state of "0/0," the old context state row on the client table is also "recycled" for use in a future cont ext switchover.

The logic of the activation states indicated by the "Valid?" and "First?" bits is given as:
1/0 - Fully Active Context Entry;
0/0 - Latent Context Entry, available for reconfiguring (default);
1/1 - Activated New Context Entry, awaiting first packet.

The principle employed above is that instead of reserving an amount of latent memory proportional to the number of contexts supported, only a small amount of recyclable latent memory is maintained. Software is responsible for maintaining the 1 ist of at least ε context states that are latent at any given time.

In another aspect of the invention, Fig. 5 illustrates a solution to the problem of maintaining sequencing/timing continuity by providing a mechanism for maintaining sequence number and timestamp continuity following a context switchover. In this aspect of the invention, a duplicate latent "shadow" table is provided that corresponds to the active table. If an active table has "n" rows, the shadow table will also have "n" rows. In additio n to having "Valid?" and "First?" fields as disclosed above, each row of the active and shadow tables has two fields for retaining the stored information for each context, a "Dynamic Context State" field and a "Static Context State" field.

As shown in Fig. 5, an exemplary context state entry in the active table is indicated by Context j, while a corresponding entry in the shadow table is identified as Context j'. In a context switchover operation, the state information in the "Static Context State" field is programmed by the host in the manner indicated above. As a result, a new Context j' is created in the client context table having an activation state of "1/1," signifying an active state but awaiting the first packet of the new context state. When the first packet is received by the client following the context switchover, the information retained in the "Dynamic Context State" field of the old Context j in the active portion of the table is copied into the new Context j'. This dynamic information can include sequence numbers, timestamp values, or any such values that are iterated over time. Upon updating information to both "Dynamic" and "Static" context state fields, the "First?" bit of the new context j' is reset to 0, indicating a full activation state of "1/0." The "Valid?" bit of the old context j' is set to "0," resulting in a latent activation state of "0/0." In this way, a context state can be changed while still preserving an iterated numbering scheme, with no loss of sequencing or time -referenced information.

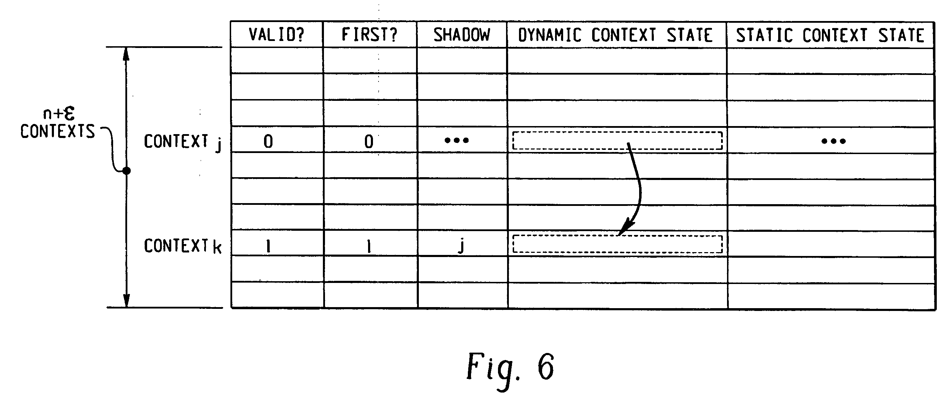

The aspect of the invention shown in Fig. 5 depicts the relationship between the respective corresponding rows of the data structure, i.e. Contexts j and j', where a duplicate, counterpart table of latent context states is maintained in correspondence to the active context state table. It should be appreciated that this aspect of the invention can be implemented as a discrete embodiment of the invention, distinct from the space -saving mechanism disclosed above. However, the aspect shown in Fig. 5 can also be implemented along with the space -saving mechanism, resulting in a data structure as illustrated in Fig. 6.

Fig. 6 shows an alternative, space -efficient data structure for context memory, with mechanism for maintaining sequencing/timing continuity. This aspect of the invention includes "Valid?" and "First?" fields as disclosed above, and also the "Dynamic Context State" field and a "Static Context State" field for retaining the stored information for each context. As shown in Fig. 6, the context data structure contains one additional column called "Shadow," which stores the mapping information between the old and the new context identifiers. The table is assigned a number of rows n+ε where "n" indicates the number of active context states at any given period, and "ε" indicates the number of available latent rows for making configuration changes. In a context switchover operation for a given Context j, a new Context k is created in the client context table. In the "Shadow " field of this new Context k, a context identifier, for example "j," is inserted to reference the new Context k to the old Context j. In the preferred embodiment, the "Shadow" field has a width of log(n+ ε) bits. For example, if n = 2000, and ε = 8, then the field would be log (2008) bits wide, or about 11 bits (where the log is base -2 ). Of course, it is to be understood that the context identifier in the "Shadow" field can be alphabetical, numerical, symbolic, or alphanumerical (as in a hexadecimal sc heme or in any scheme having any other arithmetical base), and can have any number of digits sufficient to identify the specific context from among all the other contexts in the physical channel.

Afterwards, the reconfigured state information in the "Static Context State" field of Context k is programmed by the host in the same manner indicated in the examples above. After entering the new static context information, the "Valid?" and "First?" bits of the new Context k are each set to "1," thereby assigning Context k an activation state of "1/1," signifying an active state but awaiting the first packet of the new context state.

When the first packet following a context switchover arrives, the context identifier "j" is read from the "Shadow" field, and the iterated sequence and/or timestamp information is read from the "Dynamic Context State" field of Context j and swapped into the respective field of new Context k. After the dynamic information is swapped, the "First?" field of the new Context k is set to "0," and the resulting activation state is "1/0." The "Valid?" field of old Context j is set to "0," and this context state row can then be recycled.

As described hereinabove, the present invention solves many problems associated with previous type systems. However, it will be appreciated that various changes in the details, materials and arrangements of parts which have been herein described and illustrated in order to explain the nature of the invention may be made by those skilled in the area within the principle and scope of the invention will be expressed in the appended claims.

## Claims

1. A method of context switchover continuity comprising:
sending a context from a transmitting entity to a receiving entity;
maintaining an initial first context state entry in a table at the transmitting entity and an initial second context state entry in a table at the receiving entity wherein the initial first and second context state entries include context state information about the context;
creating new reconfigured first and second context state entries having reconfigured context state information at the transmitting entity and the receiving entity;
activating the new reconfigured first and second context state entries so as to enable the sending of a reconfigured context from a transmitting entity to a receiving entity.

2. The method of claim 1, wherein the context is one of a plurality of contexts, wherein each of the plurality of contexts has respective initial first and second context entries in the table.

3. The method of claim 2, wherein the respective initial first and second context entries are active entries and wherein the new reconfigured first and second context state entries are latent entries in the table until the step of activating.

4. The method of claim 3, wherein the number of available latent entries is equal to the number of active entries, so that the latent entries are counterparts to the active entries, wherein, upon the step of activating, the latent entries are copied to their cou nterpart active entries.

5. The method of claim 3, wherein the number of available latent entries is significantly smaller than the number of active entries, wherein, upon the step of activating, the latent entries are made active and the respective the initial first and second context entries are deleted.

6. The method of any one of claims 3 to 5, wherein the respective context state entries each include:
at least one context state field for storing information about the state of each context;
a one-bit "Valid?" field for indicating whether the state of the context entry is valid for sending and receiving data throughput; and
a one-bit "First?" field for indicating whether the first packet of a context state has been received by the receiving entity.

7. The method of claim 6, wherein the step of maintaining respective initial context state entries comprises:
maintaining each of the at least one context state fields with initial context state information;
maintaining each of the "Valid?" fields at "1" to indicate that the context entry is valid for sending and receiving data throughput; and
maintaining each of the "First?" fields at "0" to indicate that the first packet of this context state has been received by the receiving entity.

8. The method of claim 7, wherein the step of creating respective new reconfigured context state entries comprises:
selecting respective first and second latent entries each having a "Valid?" field set to "0" to indicate that the context entry is not valid for sending and rec eiving data throughput;
writing reconfigured context state information into each of the at least one context state fields;
wherein the steps of selecting and writing in the receiving entity are performed upon receiving instructions from the transmitting entity;
acknowledging from the receiving entity to the transmitting entity that the step of writing reconfigured data has been completed;
setting each of the "Valid?" fields to "1" to indicate that the context entry is valid for sending and receiving data throughput; and
setting each of the "First?" fields to "1" to indicate that the first packet of this context state has not been received by the receiving entity;
wherein the steps of setting the respective fields in the receiving entity are performed upon receiving instructions from the transmitting entity.

9. The method of claim 8, wherein the step of activating the new reconfigured first and second context state entries comprises:
sending a first packet for the new reconfigured context state from the tr ansmitting entity to the receiving entity; and
setting each of the "First?" fields to "0" to indicate that the first packet of this context state has been received so that the reconfigured context state entries are fully active entries.

10. The method of claim 9, further comprising the steps of:
notifying the transmitting entity from the receiving entity that the first packet has been received;
changing the "Valid?" bit of the initial context state entry of the transmitting entity to "0," thereby invalidating the initial context state entry of the transmitting entity and converting it to a latent context state entry; and
instructing the receiving entity from the transmitting entity to change the "Valid?" bit of its initial context state entry to "0," thereby invalidating the initial context state entry of the receiving entity and converting it to a latent context state entry.

11. The method of claim 9 or 10, further comprises the steps of;
providing a static context state field in the respective context s tate entries, wherein the step of writing reconfigured context state information comprises writing to the static context state field;
providing a dynamic context state field in the respective context state entries, for retaining dynamic context information including at least one of sequence numbers, timestamp values, and other iterative values; and
following the step of sending the first packet, performing a step of copying the dynamic context information from the dynamic context state field of the respecti ve initial context state entries to the new reconfigured context state entries.

12. The method of claim 11, further comprising the steps of:
providing each context state entry with a shadow field for storing a context identifier for mapping between the initial active context state entry and the respective latent reconfigured context state entry;
during the step of creating respective new reconfigured context state entries, storing the context identifier from the initial active context state entry into the respective latent reconfigured context state entry;
following the step of sending the first packet, performing a step of reading the context identifier from the shadow field of the latent reconfigured context state entry;
wherein the step of copying the dynamic context information comprises swapping the dynamic context information from the dynamic context state field of the initial active context state entry into the dynamic context state field of the respective latent reconfigured context state entry.

13. An implementation of context switchover continuity comprising:
means for sending a context from a transmitting entity to a receiving entity;
means for maintaining an initial first context state entry in a table at the transmitting entity and an initial second context state entry in a table at the receiving entity
wherein the initial first and second context state entries include context state information about the context;
means for creating new reconfigured first and second context state entries having reconfigured context state information at the transmitting entity and the receiving entity;
means for activating the new reconfigured first and second context state entries so as to enable the sending of a reconfigured context from a transmitting entity to a receiving entity.

14. The implementation of context switchover continuity of claim 13, wherein the context is one of a plurality of contexts, wherein each of the plurality of contexts has respective initial first and second context entries in the tab le.

15. The implementation of context switchover continuity of claim 14, wherein the respective initial first and second context entries are active entries and wherein the new reconfigured first and second context state entries are latent entries in the table until the step of activating.

16. The implementation of context switchover continuity of claim 15, wherein the number of available latent entries is equal to the number of active entries, so that the latent entries are counterparts to the active ent ries, wherein the means for activating comprises means for copying the latent entries to their counterpart active entries.

17. The implementation of context switchover continuity of claim 15, wherein the number of available latent entries is significantly smaller than the number of active entries, wherein the means for activating makes the latent entries active and deletes the respective the initial first and second context entries.

18. The implementation of context switchover continuity of any one of cl aims 15 to 17, wherein the respective context state entries each include:
at least one context state field for storing information about the state of each context;
a one-bit "Valid?" field for indicating whether the state of the context entry is valid for sending and receiving data throughput; and
a one-bit "First?" field for indicating whether the first packet of a context state has been received by the receiving entity.

19. The implementation of context switchover continuity of claim 18, wherein the means for maintaining respective initial context state entries comprises:
means for maintaining each of the at least one context state fields with initial context state information;
means for maintaining each of the "Valid?" fields at "1" to indicate that the context entry is valid for sending and receiving data throughput; and
means for maintaining each of the "First?" fields at "0" to indicate that the first packet of this context state has been received by the receiving entity.

20. The implementation of context switchover continuity of claim 19, wherein the step of creating respective new reconfigured context state entries comprises:
means for selecting respective first and second latent entries each having a "Valid?" field set to "0" to indicate that the context entry is not valid for sending and receiving data throughput;
means for writing reconfigured context state information into each of the at least one context state fields;
wherein the means for selecting and writing in the receiving entity perform upon receiving instructions from the transmitting entity;
means for acknowledging from the receiving entity to the transmitting entity that the step of writing reconfigured data has been completed;
means for setting each of the "Valid?" fields to "1" to indicate that the context entry is valid for sending and receiving data throughput; and
means for setting each of the "First?" fields to "1" to indicate that the first packet of this context state has not been received by the receiving entity;
wherein the means for setting the respective fields in the receiving entity perform upon receiving instructions from the transmitting entity.

21. The implementation of context switchover continuity of claim 20, wherein the means for activating the new reconfigured first and second context state entries comprises:
means for sending a first packet for the new reconfigured context state from the transmitting entity to the receiving entity; and
means for setting each of the "First?" fields to "0" to indicate that the fir st packet of this context state has been received so that the reconfigured context state entries are fully active entries.

22. The implementation of context switchover continuity of claim 21, further comprising:
means for notifying the transmitting entity from the receiving entity that the first packet has been received;
means for changing the "Valid?" bit of the initial context state entry of the transmitting entity to "0," thereby invalidating the initial context state entry of the transmitting entity an d converting it to a latent context state entry; and
means for instructing the receiving entity from the transmitting entity to change the "Valid?" bit of its initial context state entry to "0," thereby invalidating the initial context state entry of the receiving entity and converting it to a latent context state entry.

23. The implementation of context switchover continuity of claim 21 or 22, further comprising:
means for providing a static context state field in the respective context state entries, wherein the step of writing reconfigured context state information comprises writing to the static context state field;
means for providing a dynamic context state field in the respective context state entries, for retaining dynamic context information including at least one of sequence numbers, timestamp values, and other iterative values; and
means for copying the dynamic context information from the dynamic context state field of the respective initial context state entries to the new reconfigured context state entries.

24. The implementation of context switchover continuity of claim 23, further comprising:
a shadow field for storing a context identifier for mapping between the initial active context state entry and the respective latent reconfigured context state entry;
means for storing the context identifier from the initial active context state entry into the respective latent reconfigured context state entry;
means for reading the context identifier from the shadow field of the latent reconfigured context state entry; and
means for swapping the dynamic context information from the dynamic context state field of the initial active context state entry into the dynamic context state field of the respective latent reconfigured context state entry.
